# EUROPEAN PATENT SPECIFICATION

(11) **EP 2 446 294 B1**
(45) Date of publication and mention of the grant of the patent: **18.03.2015**
(21) Application number: 10727422.7
(22) Date of filing: 28.06.2010
(51) Int. Cl.: G01S 5/14, G01S 5/02

(54) **METHOD AND SYSTEM FOR DETERMINING THE LOCATION OF A MOVING SENSOR NODE**
VERFAHREN UND SYSTEM ZUR BESTIMMUNG DER POSITION EINES SICH BEWEGENDEN SENSORKNOTENS
Procédé et système pour déterminer l'emplacement d'un noeud de capteur en mouvement

(30) Priority: 26.06.2009 EP 09163925
(43) Date of publication of application: 02.05.2012
(73) Proprietor: Masat B.V., 1211 GL Hilversum (NL)
(72) Inventor: RUTGAIZER, Ilya, Almaty 050057 (KZ); MALBEKOV, Zhanat, Almaty 050057 (KZ)
(74) Representative: Visscher, Erik Henk
(86) International application number: PCT/EP2010/059156
(87) International publication number: WO 2010/149796

(56) References cited:
- EP-A- 0 856 746
- EP-A- 1 093 318
- US-A1- 2003 190 920
- US-A1- 2006 194 593
- US-A1- 2007 258 408

## Description

### Field of the invention

The invention relates to methods and systems for determining the location of a moving sensor node, in particular, though not exclusively, to methods and systems for determining location information associated with at least one moving sensor node adapted for communicating with a wireless network of fixed coordinating nodes, a sensor node and a coordinating node for use in such system and a computer program product using such method.

### Background of the invention

With the introduction of wireless telecommunications technology (e.g. terrestrial and/or satellite wireless communication techniques), communications systems emerged which allow collection of location information of moving objects such as vehicles or people within a predetermined area. One application of such location determination systems is the regulation of traffic in order to eliminate or at least to reduce traffic congestions which may have a substantial impact on the economical growth and/or the environment in an urbanized area. On the basis of the location information and information from other sources (e.g. the weather or road construction information), such communication system may provide information regarding alternative routes and/or alternative ways of transportation in order to circumvent the traffic congestion. For example, on the basis of the location information persons may be monitored for entering or leaving specially secured areas.

The use of a wireless communication system in such applications renders a number of technical problems. One problem relates to the required accuracy. When monitoring the location of a large number of moving objects typically the accuracy should be about the size of the moving object, e.g. 2-3 meters for a car and one meter or less for a moving person.

A further problem relates to the large number of objects to be monitored. Real-time monitoring, including dynamic processing of measured location information for determining the velocity and acceleration/deceleration of the monitored objects require efficient and low-power protocols for managing and processing of the signals generated by the wireless transceiver elements in the communication system.

Known location determination techniques based on existing 2G or 3G telecommunications infrastructures do not meet the above mentioned requirements. For example, the accuracy provided by the location determination service in GSM (based on the Timing Advance value as defined in the GSM specification) depends on the cell size and is typically 200 or 300 meters in urban environments and several kilometres in rural areas. Further, the terminal-based E-OTD (Enhanced Observed Time Difference) service as described in 3GPP TS 03.71 requires software in the phone calculating the position using signals from three base stations. This system also depends on the cell size may provide an accuracy of 50 to 250 meters.

An accuracy of 10 to 30 meters may be obtained using the terminal-based A-GPR (Assistant GPS) system, which requires both software and a GPS chip in a wireless terminal. GPS however is expensive and has relatively high energy consumption. Accurate GPS tracing of large amounts of objects (e.g. more than 60-100 thousand objects) moving at high speed would require too much wireless bandwidth load. Moreover, the accuracy of GPS depends on many parameters. Conditions of the atmosphere, troposphere and ionosphere, and objects such as buildings, trees and tunnels between the satellite and the receiver may produce blind spots and interference effects causing deviations as much as 30 meters or more.

In addition, the above mentioned location services typically use data channels within the communications system which are not suitable for fast transmission of large amounts of data as required for real-time location monitoring services.

US2008/0095134 describes a dedicated traffic communications system which does not rely on GPS. The system uses so-called road-side units (RSU) located at known coordinates along a road. Each RSU broadcasts a signal to a group of vehicles within the radio coverage of the RSU. Thereafter, each vehicle reports its presence to a position application in the RSU. Hence, in such system the accuracy depends on the density of RSUs located along the road. Such system therefore is not or at least less suitable for applications dealing with a large number of objects which may freely move through an area monitored by the location determination system.

D1 (US 2003/0190920) describes a plurality of base stations configured to calculate distances from the mobile terminal based on a reception time for the predetermined signal transmitted from the terminal and then transmit the distance values to a cell controller. The cell controller traces the location of terminals by finding location information corresponding to the distance values.

D2 (EP 0 856 746) describes a plurality of base stations configured to transmit a characteristic signal in synchronism with transmitting times of other characteristic signals of neighboring bases stations. A mobile station is configured to calculate the time differences in receiving the characteristic signals transmitted from respective bases stations. A confirmation signal representing the calculation result is sent back to each bases station. The time difference values are inherent to a grid section.

D3 (US 2006/0194593) describes a base station capable of determining one or more distances between a mobile unit and locations of serving base stations using round trip delay information. One or more circles may be constructed using the distances and a location may be selected using intersections of the circles.

Hence there is a need in the prior art for improved methods and systems for providing accurate location information on moving objects without the use of GPS. Further, there is a need for an improved system that is less sensitive to atmospheric and interference noise and that provides dynamic processing of information derived from location information and/or that uses an efficient low-energy transmission protocol for processing the location information.

### Summary of the invention

It is an object of the invention to reduce or eliminate at least one of the drawbacks known in the prior art. The object is achieved by means of respective method, system, sensor node and coordinating node, as defined in the claims. In a first aspect of the invention may relate a method for determining location information of at least one moving sensor node adapted for communicating with a wireless network of fixed coordinating nodes.

The method may comprise at least one of the steps of: providing an area or a volume associated with at least three coordinating nodes in communication with said sensor node, dividing said area or volume into an array of cells having a predetermined pitch; generating a transformation table by associating the coordinates of each of said cells with distances between said cell and each of said coordinating nodes; receiving in response to a first location request said sensor node first distance information between said sensor node moving in said area or said volume and said coordinating nodes, said first location request being sent at a first point in time; and, transforming said first distance information into first coordinates associated with said sensor node using said transformation table. The use of one or more transformation table for transforming relative distance information into absolute location information allows very fast and efficient determination of the location of a moving object. Further, the method allows the functionality in the sensor node and the protocol for exchanging information between the sensor node and the coordinating node to be simple. Hence, such scheme is very advantageous for real-time monitoring of the location of a moving object.

In one embodiment the method further may comprise the steps of: providing the coordinates of said coordinating nodes; determining the absolute coordinates of each of said cells in said area using said coordinates of said coordinating nodes. The absolute coordinates of the coordinating nodes are known in advance, thus allowing simple determination of a grid of cells which may be used for in determining the location coordinates of the moving sensor. Further, the method allows easy adaptation of the accuracy of the method by adapting the pitch of the array.

In another embodiment, the method may further comprise the steps of: said sensor node transmitting a location request to said coordinating nodes; each of said coordinating nodes sending response signal back to the sensor node; determining on the basis of the response signals said first distances; sending said first distance information to one of said coordinating nodes. Hence, one location request may be used in order to retrieve at least three responses which may be used in determining the position relative to said coordinating nodes. This scheme thus requires a minimum of signaling in order to obtain accurate location information.

In one embodiment, the method further may comprise the steps of: determining first distances between the sensor node and each of said coordinating nodes on the basis of the round-trip time associated with each response signal; sending said first distances between said sensor node and each of said coordinating nodes in a location packet to one of said coordinating nodes. Determining the round-trip time allows simple calculation of the relative distances between the sensor node and the at least three coordinating nodes.

In one variant the method further comprises the steps of: determining on the basis of said first distances the coordinating node closest to the sensor node; sending said location packet to said closest sensor node. Sending the measured distances to the closest sensor node reduces the chance of transmission errors.

In another variant a second point in time t2 for generating second distances between the sensor node moving in said area and said coordinating nodes is determined on the basis of the velocity of said sensor node, preferably on the basis of the velocity of said sensor node at said first point in time t1. Hence, the sampling rate for determining location data may be dynamically adjusted. If the velocity of the senor node changes, the system may automatically adjust the sampling frequency so that accurate location information at all velocities is ensured.

In yet another variant, the method may comprise the step of: receiving in response to a second location request of said sensor node, second distances between said sensor node moving in said area and said coordinating nodes, said second location request being sent at said second point in time t2; calculating the velocity of the sensor at said second point in time using said first and second distances and t1 and t2.

In one variant said first and/or second location request may at least at least comprise a sensor identifier. In another variant each of said response signals comprises a sensor identifier for identifying the request associated with said response signal and/or a coordinating node identifier for identifying the coordinating node which generated said response signal.

In a further variant said first distances and/or said second distances between said sensor node and said coordinating nodes are determined on the basis of the round-trip time of said request and each of said coordinating node.

In another aspect, the invention may relate to a system for determining location information. The system may comprise at least one moving sensor node adapted for communicating with a wireless network comprising a plurality of fixed coordinating nodes. Further, the system may comprise at least three coordinating nodes, wherein at least one of said coordinating nodes comprises a grid function configured to associated an area with said coordinating nodes; to divide said area into cells of a predetermined pitch and for each of said cell to associate distances between said cell and each of said coordinating nodes with absolute coordinates; and/or a sensor node in communication with said coordinating nodes, said sensor node comprising means for determining distances between the sensor node moving in said area and said coordinating nodes and means for sending said distances to said coordinating node comprising said location function.

In a further aspect the invention may relate to a sensor node for use in a system as described above. The sensor node may comprise: a transmitter configured for sending a location request to at least three coordinating nodes, said location request comprising at least a sensor identifier, a receiver configured for receiving a response signal from said each of said coordinating nodes, said response signal comprising a sensor identifier for identifying the location request associated with said response signal and a coordinating node identifier for identifying the coordinating node which generated said response signal; a clock for determining transmission time of said location request and/or arrival time information of each of said response signals; a location function configured for determining the distances between the sensor node and said coordinating nodes using said arrival time information, said location function further being configured for providing a location packet comprising said distances.

In yet a further aspect the invention may relate to a coordinating node for use in a system as described above. The coordinating node may comprise: a transmitter configured for transmitting a response signal, said response signal comprising a sensor identifier for identifying a location request associated with said response signal and a coordinating node identifier for identifying said coordinating node; a receiver configured for receiving a location request from a sensor node, said location request comprising at least a sensor identifier and for receiving distances between the sensor node and said coordinating nodes; a grid function configured for determining an area associated with at least three coordinating nodes in communication with said sensor node, said area being divided into an array of cells having a predetermined pitch, said grid function further being configured for generating a transformation table associating the coordinates of each of said cells with predetermined distances between said cell and each of said coordinating nodes; a location function for transforming said first distances into first coordinates using said transformation table.

The invention also relates to a computer program product comprising software code portions configured for, when run in the memory of a mobile device, executing one or more method steps as described above. Further, the invention may also relate to a data signal embodied in a carrier wave propagating over a transmission line of a computer system and/or a data network connected to a computer system, said data signal comprising data encoding at least part of a computer program product as described above; and to a computer program storage medium readable by a computer system and encoding a computer program product as described above.

The invention will be further illustrated with reference to the attached drawings, which schematically will show embodiments according to the invention. It will be understood that the invention is not in any way restricted to these specific embodiments.

### Brief description of the drawings

**Fig. 1A and 1B** depict a schematic of a part of a communications network and a sensor node used therein according to at least one embodiment of the invention.
Fig. 2 depicts the formation a transformation table according to one an embodiment of the invention.
**Fig. 3A** and **3B** depict topologies of a network of coordinating nodes.
Fig. 4-6 depict three schematic situations in the processing of location information according to one embodiment of the invention.
Fig. 7 depicts a flow diagram of determining the sampling time as function of time.
Fig. 8 depicts a schematic of a calibration process in a communication network in one embodiment of the invention.

### Detailed description

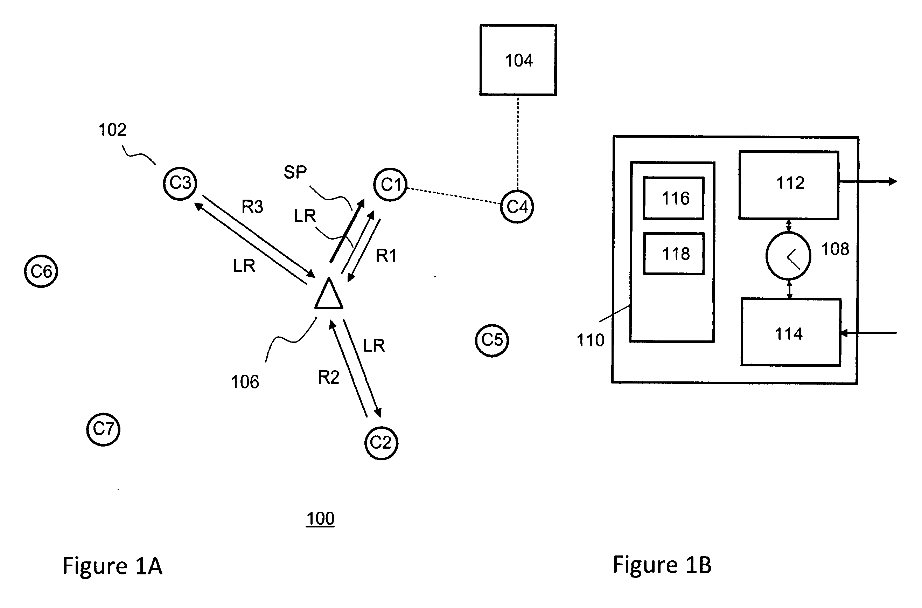

**Fig. 1A** depicts a schematic of a part of a communications network **100** according to at least one embodiment of the invention. The network may include a plurality of coordinating nodes **102** (represented by circles). The absolute location of the coordinating nodes may be accurately determined in advance using techniques well known in the art. This accurate geo-location may be stored in each coordinating nodes during installation or initialization. Alternatively, the location of the coordinating nodes may be determined relative to the geo-location of one coordinating node which serves as a reference coordinating node. The coordinating nodes may form a fixed two-dimensional multi-hop communications network wherein some coordinating nodes may be communicated directly with each other. To that end, the memory of each coordinating node may comprise a list of directly addressable coordinating nodes. Other coordinating nodes may only communicate with another coordinating node via one or more further coordinating nodes in the network. The memory of each coordinating node may also contain the absolute coordinates of the coordinating nodes identified in the list. As the absolute coordinates (e.g. longitude and latitude) of each coordinating node is known, the list may be easily created.

The communications network may further comprise a plurality of moving sensor nodes **106** (represented by a triangle). Typically, the sensor node may be associated with a moving object, such as vehicles,(motor)bikes, moving persons or the like. The sensor nodes may freely move through the network of coordinating nodes and directly communicate with one or more coordinating nodes and/or other sensor nodes in the network, provided that the sensor node and coordinating nodes and/or one or more further sensor nodes are within each others reception/transmission range. Hence, the network of the coordinating nodes serve a fixed, wireless support network for transmitting information to and receiving information from the moving sensor nodes. The coverage of the coordinating nodes may be such that at every point in network of coordinating nodes a sensor node is always within the range of at least three coordinating nodes.

The communications network further comprises a central system controller **104.** Information received by the coordinating node from the sensor nodes may be sent in packets via one or more coordinating nodes to the system controller, which may process the information and/or forward the information to further system using the information.

**Fig. 1B** generally depicts the hardware layout of a sensor node and a coordinating node. It may generally comprise at least a RF transmitter **112,** a RF receiver **114,** a clock **108** for determining transmission and/or arrival times of signals, a memory **110** and a microprocessor. The memory may comprise one or more applications **116** for controlling and processing the transmission and reception of signals. The sensor node may be preferably implemented as an integrated circuit so that it may be easily attached to or integrated with moving objects.

The sensor node may be configured for determining its distance relative to one or more coordinating nodes by determining the round-trip time, i.e. the time required for a data packet to travel from the sensor node to the coordinating node and back again. To that end one of sensor node may comprise a time-of-arrival (TOA) function **118** configured to transmit at a first point in time, transmission time T1, a location request LR comprising a unique sensor identifier S_ID, to the coordinating nodes within range. Further, the coordinating node may be configured to receive a location request of sensor nodes. The location request may trigger a low delay response back to the sensor node. In **Fig. 1A** depicts the interaction between the sensor node and the coordinating nodes in more details. Coordinating node C1 located at a distances L1 closest to the sensor node, may be the first to receive the location request LR transmitted by the sensor node. The request triggers the coordinating node C1 to transmit a first location response R1(S_ID,C1_ID) back to the sensor, wherein C1_ID represents a unique identifier for identifying coordinating node C1. In this scheme, it is assumed that the time for the coordinating node to transmit a response back to the sensor node is a known constant ΔT which may be small with respect to the other time scales in the system.

The TOA function may receive the first response R1 at an arrival time T2 > T1, so that the distance L1 between the sensor node and the coordinating node C1 may be determined by the TOA function as L1=c(T2-T1-ΔT)/2, wherein c is the speed of light (3x10⁸ m/s).

Thereafter, the TOA function may receive the responses R2(S_ID,C2_ID) associated with coordinating node C2 and R3(S_ID,C3_ID) associated with coordinating node C3 at arrival times T3 and T4 respectively. Using the transmission time T1 and arrival times T3 and T4, the TOA function may determine the distances L2=c(T3-T1-ΔT)/2 and L3=c(T4-T1-ΔT)/2 and store these values together with identification information in a memory of the sensor node. The sensor node may generate a sensor packet SP comprising a sensor node ID and the relative distances associated with the coordinating nodes i.e. (C1_ID,L1; C2_ID,L2; C3_ID,L3) and sent the location packet to one of the coordinating nodes.

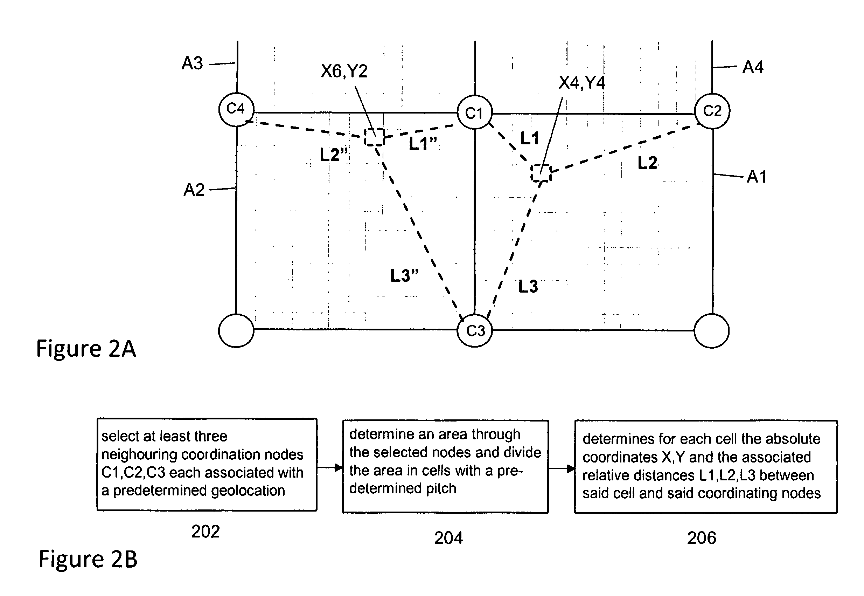

The coordinating nodes may comprise a location function for receiving the location packets and processing the information therein using one or more transformation tables for transforming relative distances (L1, L2, L3,...) associated with a location packet into absolute coordinates (X,Y, ...). It is submitted that the principle described with reference to Fig. 1 and 2 may be easily extended to determining the location of at least one moving sensor node in 3D space. Relative distances (L1,L2,L3,L4) between a sensor node and at least four coordination nodes (C1,C2,C3,C4) may be determined and a transformation table may transform relative distances (L1,L2,L3,L4) in a location packed into absolute coordinates (X,Y,Z). Furthermore, other geodetic reference systems based on e.g. longitude and latitude may also be used.

The one or more transformation tables associated each coordinating node may be generated at the initialization of the network of the coordinating nodes and stored into the memory of coordinating nodes. **Fig. 2A** and **2B** depict the process of forming a transformation table according to one an embodiment of the invention wherein the coordinating nodes are arranged in plane in a simple square array.

A grid function in the coordinating node C1 may select two neighboring coordinating nodes C2 and C3 from the list of coordinating nodes stored in the memory (step **202**). The grid function may use the absolute coordinates of the coordinating nodes for defining the outer borders of a square area A1. Thereafter, the grid function divides the area A1 into a grid having a pitch which may be selected on the desired positioning accuracy of the system (step **204**). Then, on the basis of the known geographical coordinates of the three coordinating nodes, the grid function determines for each grid cell the absolute coordinates (X, Y, Z, ...) and the associated relative distances (L1, L2, L3, L4, ...) (i.e. the distances between a grid cell and the coordinating nodes) and stored the calculated values into a first transformation table (step **206**). The grid function may further generate a second transformation table for a further area associated with coordinating node C1 and determined by coordinating node C1, C3 and C4.

This way in the non-limiting example of Fig. 2, L1, L2, L3 may be associated e.g. with grid cell X4,Y4 in a first transformation table and L1",L2",L3" may be associated e.g. with grid cell X6,Y2 in a second transformation table. Hence, in the example depicted in **Fig. 2****,** the grid function may use this process to generate four transformation tables for coordinating node C1 associated with four areas A1-A4 within its reception range.

In case of 3D location determination (not shown) the grid function in the coordinating node C1 may select three neighboring coordinating nodes C2,C3,C4 from the list of coordinating nodes stored in the memory. The grid function may use the absolute coordinates of the coordinating nodes for defining the outer borders of a cubic volume V1. Thereafter, the grid function divides the volume V1 into a grid having a pitch which may be selected on the desired positioning accuracy of the system. Then, on the basis of the known geographical coordinates of the at least four coordinating nodes, the grid function determines for each grid cell the absolute coordinates (X, Y, Z, ...) and the associated relative distances (L1, L2, L3, L4, ...) (i.e. the distances between a grid cell and the coordinating nodes) and stored the calculated values into a first transformation table. The grid function may further generate further transformation tables associated with further volumes defined by further coordinating nodes.

Hence, when receiving a sensor packet SP of a moving sensor node in area or a volume, a location function in the coordinating node may be triggered. The location function transforms the relative distances (L1, L2, L3, L4, ...) contained in the sensor packet into an absolute location values (X, Y, Z, ...) using the transformation table associated with the area or volume. To that end, the location function compares the distances in the received sensor packet with the distances in the transformation table as calculated by the grid function. The absolute location value associated with the distance values in the table closest to the measured distance values is selected by the location function to be the absolute location of the sensor node. The thus determined absolute location value may be stored in the memory of the coordinating node. This way, the coordinating node may process a predetermined number of subsequent sensor packets originating from the same sensor node and being received within a predetermined time period. The location information associated with a moving sensor node and collected over a determined period T before it is sent together with identification information of the sensor node and the coordinating node and clock information in a location packet LP via one or more coordinating nodes a central system controller **104.**

In one embodiment, a sensor node and/or coordinating nodes may comprise other sensors, e.g. a gas, temperature and/or acceleration sensor. These gas and/or temperature sensors may be triggered if a certain value (gas concentration e.g. CO and CO2 gas, temperature, vibration, acceleration) is sensed. Sensor information may be subsequently sent in the location packets to the central system controller **104.** Such sensors are of particular importance when using the location determination method in safety monitoring applications e.g. on a drilling rig, a mining site or a factory (e.g. a chemical plant or the like).

The coordinating nodes may use a high-speed communications protocol (e.g. WiMax on IEEE 802.16) or the like in order to allow high-volume data traffic to transfer to the central system. Further, into the coordinating nodes may be implemented a small casing comprising e.g. a solar battery so that the coordinating network may be energy independent and easily set-up.

In the above scheme, it is the sensor node that triggers a response from the coordinating nodes which is used by the sensor node in determining round-trip times without using the clock in the sensor node. Further, it is the sensor node that centrally determines the relative distance information necessary for the coordinating node to determine the absolute location. The protocol between the sensor node and coordinating node is simple and the number of packets to obtain the necessary relative distance information is kept to a minimum, which is particularly advantageous in low-energy applications. Clock synchronization between the sensor nodes is not required and the use of transformation tables allows very fast and efficient determination of the absolute location information, which is very advantageous when requiring real-time monitoring of the location of a moving object.

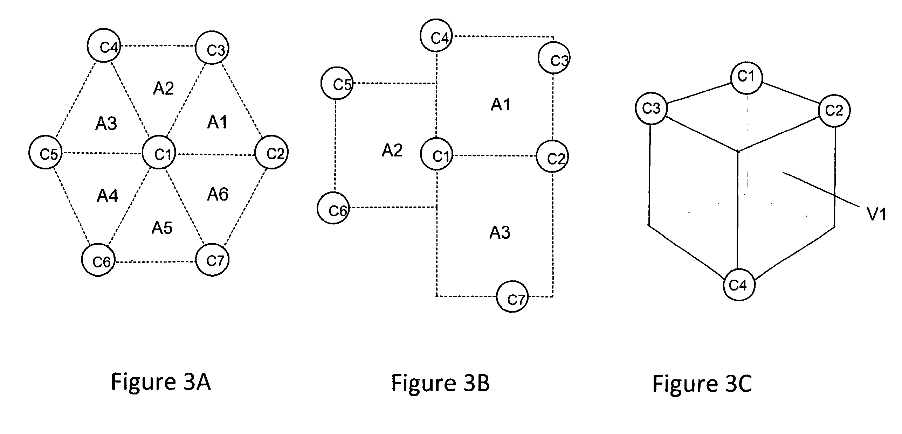

The process of forming transformation tables may be used with an arbitrarily network topology net (triangular, pentagonal, random, etc.), wherein the number tables may vary according to the topology. **Fig. 3A** depicts an example of a triangular topology wherein a coordinating node C1 may comprise six transformation tables associated with the six areas A1-A6 it may form with its neighboring coordinating nodes C2-C7. **Fig. 3B** depicts an example of a random topology wherein the areas A1-A3 defined by the coordinating nodes and the number of transformation tables in each coordinating node may differ. For example in **Fig. 3B** coordinating C1 may comprise three transformation tables. Further, it is appreciated that the accuracy of the above described schemes may be improved by using one or more further coordinating nodes thereby extending the system to use four or more relative distances (L1, L2, L3, L4, ...).

Alternatively or in addition, the scheme may be extended with one or more coordinating nodes for determining the Z-coordinate in addition the absolute X,Y coordinates. In that case, the location function may for example select four coordinating nodes C1-C4 and determine a cube or in more general, a parallopipidum, and divide the cube (or parallopipidum) in cells of a predetermined pitch determined by the required accuracy of the system. This example is illustrated in more detail in **Fig. 3C** depicting an example of a 3D network topology wherein a volume V1 is defined by four coordinating nodes C1-C4. Location determination of a moving sensor node in a 3D space is of particular interest in safety application within a confined space, e.g. a drilling rig or a mining site. Persons within such space may be constantly monitored using the methods and systems as described with reference to Fig. 1-8.

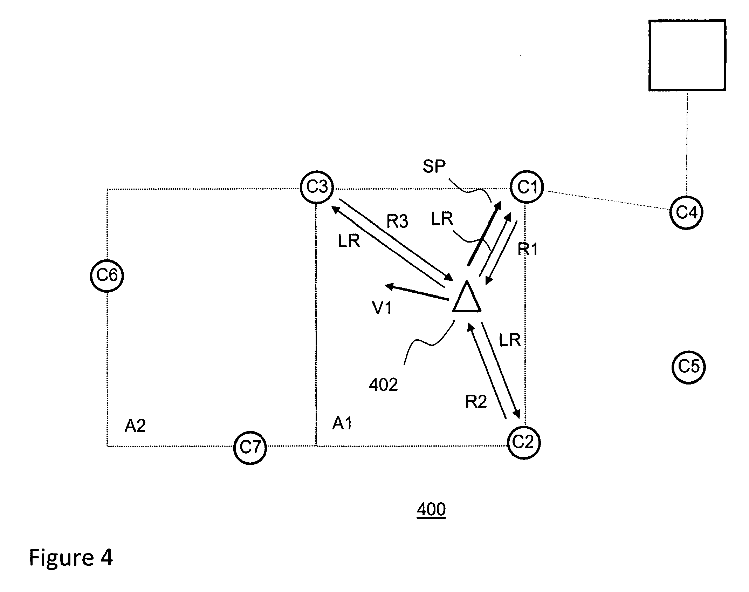

**Fig. 4-6** depict three subsequent situations in the processing of location information of a moving sensor node according to one embodiment of the invention. **Fig. 4** depicts a first situation wherein at a first point in time t₁ a sensor node **402** moves with a velocity V₁ into a first area A1 controlled by the three coordinating nodes C1, C2 and C3. At t₁ the sensor node may transmit a location request LR to the coordinating nodes and may receive in return the response signals R1-R3 of the three coordinating nodes in the way as described above with reference to **Fig. 1****.**

On the basis of the arrival times of the responses, the sensor node may select the coordinating node C1 associated with the response first received (i.e. the coordinating node closest to the sensor node) as the base node and C2 and C3 as its first and second auxiliary nodes respectively, wherein the base node is selected by the sensor node to process a sensor packet. Alternatively or in addition, the base node may be determined on the basis of the signal strength of the responses R1-R3. Hence, at a periodic time intervals Δt the sensor node may transmit a location request to coordinating nodes associated with an area in which the sensor node moves, process the responses of the coordinating nodes using a TOA function and send the location information determined by the sensor node in a sensor packet SP to the base node as described above in relation with **Fig. 1****.** The base node (coordinating node C1) may transform the distances into absolute coordinates and store the thus measured coordinates into its memory. This way the base node may continue to process sensor packets from the sensor as long as it is the coordinating node closest to the sensor node.

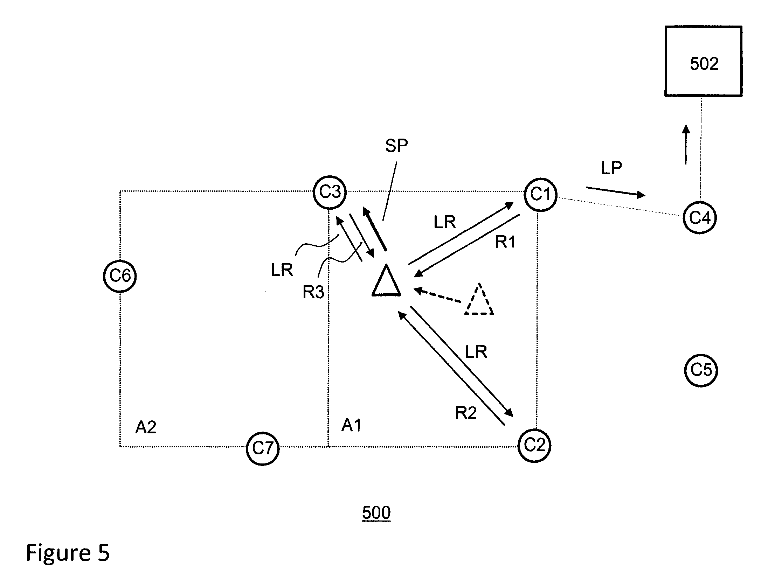

If during the process the sensor node determines that another coordinating node, e.g. C3, has become the closest coordinating node, it may select this coordinating node to be the new base node. This situation is depicted in **Fig. 5****.** In that case, the sensor node may send a termination signal TS (not shown) to the old base node C1, which instructs coordinating node C1 to send the location data stored in the old base node C1 and not yet send to the central system in a location packet LP via one or more coordinating nodes to the central system controller **502.** Alternatively, the new base station, e.g. C3, may send a termination signal TS (not shown) to the old base node C1 by itself.

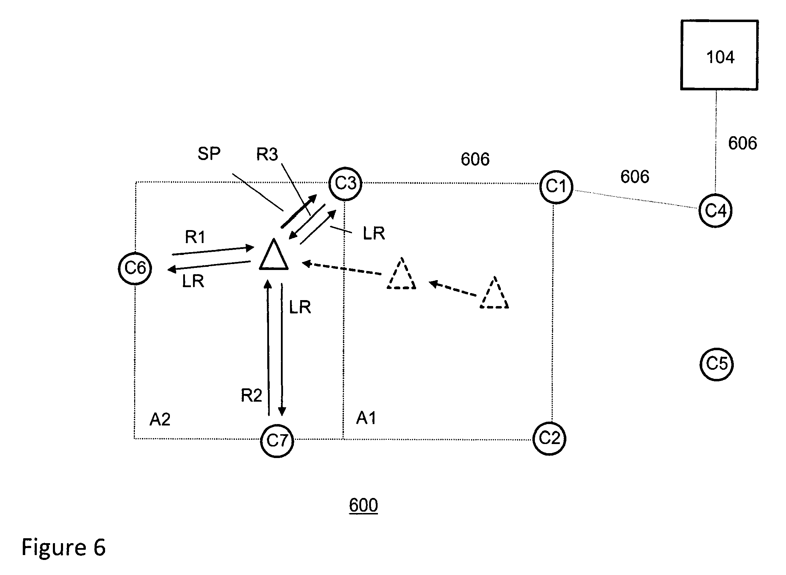

Thereafter the sensor node will send its sensor packets to the new base node C3. After a further time interval Δt, the sensor node may enter area A2 controlled by coordinating nodes C3, C6 and C7. This situation is illustrated in **Fig. 6****.** As C3 is still the closest coordinating node the sensor node will continue sending its sensor packets to C3. In this case however, C6 and C7 act as the new first and second auxiliary nodes. Hence, when moving through the network of coordinating nodes, the sensor node each time selects the closest coordinating node and/or the coordinating node with the strongest signal as the base station, thereby reducing the risk of losing information because of bad signal reception, e.g. during bad weather conditions and/or interference. It is appreciated that in the process described with reference to **Fig. 4-6****,** a coordinating node may serve as a base node for more than one sensor node. Further, a coordinating node may serve as a base node for one sensor node and as an auxiliary node for another sensor node.

In the process described with reference to **Fig. 4-6****,** the sensor node periodically transmits a location request to the coordinating nodes in order to allow the base station to determine the absolute location of the moving object as a function of time. The central system controller may set the sampling time Δt of a sensor node at a desired value upon initialization of the system or, alternatively, the base station may dynamically set the sampling time Δt of a sensor node, or, alternatively, the sensor node may be configured to select an appropriate sampling time. In yet another variant, the sensor node may receive and/or the sampling time on the basis of information (i.e. speed, acceleration, etc.) provided by the moving object the sensor node is connected to. In that case, the sensor node may comprise an interface for communicating with the control system of the moving object, i.e. the electronic control system of a vehicle.

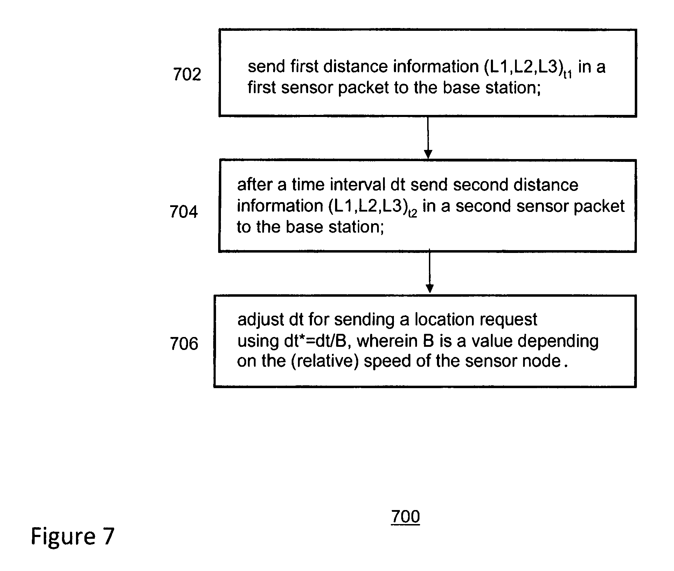

In some embodiments, the sensor node may be configured to dynamically adjust the sampling frequency as a function of a sensor parameter. In particular, in one embodiment the sensor node may use the velocity of the sensor node in order to determine the sampling time. This process is depicted in more detail in the flow diagram of **Fig. 7****.**

At t₁ a first the sensor node moving at a velocity v₁ through area A1 may send a sensor packet comprising first distance information (L1, L2, L3)ₜ₁ to the base station (step **702**). After an initial time interval Δt, the sensor node may send a second sensor packet comprising second distance information (L1, L2, L3)ₜ₂ at t₂ to the base station (step **704**). A sampling function in the sensor node may thereafter dynamically adjust the time interval Δt for sending the next location request to the coordinating nodes. The sampling function may use for example the formula dt^{*}=dt/B, wherein B is a value which depends on the (relative) speed of the sensor node (step **706**).

In one embodiment, the base station may determine the absolute coordinates X1,Y1 and X2,Y2 on the basis of the information received in the sensor packets and calculate a new velocity V₂={(X₂, Y₂)-(X₁, Y₁)}/dt₁, which is subsequently sent to the sensor node. The sensor node may than determine a new time interval using dt^{*}=dt/B where B=V₂/V₁. In another embodiment, no velocity information is send back to the sensor node. Instead, it may select distance which has changed the most (e.g. (L₂)t₂-(L₂)t₁) and use the ratio (L₂)ₜ₂/(L₂)ₜ₁ for B. This embodiment has the advantages that no further signaling between the sensor node and the coordinating node is required.

The sampling function may store the calculated value dt₁ and the distances information (L1, L2, L3)ₜ₁ associated with t₁ in its memory. Further, it may send a copy of dt₁ and the relative location information to the base node, which will transform the distances in the absolute coordinates X1, Y1 and store this coordinate and dt₁ for later use.

Using the information in the sensor packet, the base station may calculate the new velocity V₂={(X₂, Y₂)-(X₁, Y₁)}/dt₁ of the sensor node on the basis of the absolute velocity and, optionally, the acceleration W=V₂-V₁/dt₁ and store these calculated values in its memory. Thereafter, the cycle as described above is repeated using (L1, L2, L3)ₜ₂ and V₂ as the new initial values. After a predetermined time or a predetermined number of absolute location coordinates, the base station node may transmit a location packet LP comprising the sensor ID number, a time stamp, the measured absolute locations and, optionally, the associated velocity and acceleration information via one or more coordinating nodes to the central system controller.

In the scheme referred to in **Fig. 7**, the sensor node may send - when switching to a new base station - a termination signal TS comprising an identifier of the coordinating node acting as the new base station to the old base station. Upon reception of the termination signal, the old base station may be triggered to send the remaining location data in a location packet to both the central system controller and the new base station thereby allowing the new base station to continue the determination of the velocity and, optionally, the acceleration using the last measured values.

Hence, using the sampling function in sensor node, the sampling rate for determining location data may be dynamically adjusted. If the velocity of the senor node changes, the system may automatically adjust the sampling frequency so that accurate location information at all velocities is ensured. The dynamically determined information on the location, velocity and acceleration of moving sensor nodes allows the monitoring system to predict trajectories of moving sensors.

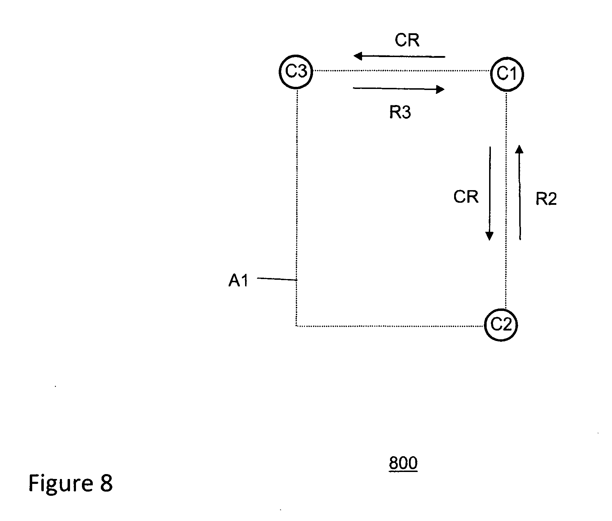

**Fig. 8** depicts a schematic process of using the coordinating nodes for calibrating the relative distances measured by the sensor node. In this scheme a coordinating node C1 may send a calibration request CR to a first and second neighboring coordinating node C2 and C3 respectively and measure the distance between C1 and C3 and the distance between C1 and C2 on the basis of the round-trip time in a similar way as described with reference to **Fig. 1****.** As the absolute coordinates and thus the distance between the coordinating nodes are accurately known, differences between the measured and the real distances C1-C3 and C1-C2 may be caused by environmental conditions and/or interference. Hence, this difference may be used by the coordinating nodes to correct the relative distances measured by the sensor nodes. This way, external effects causing (static) deviations and/or errors in the distance measurements may be effectively eliminated or at least reduced.

The method above may be used in monitoring traffic moving through a communications network as described with reference to **Fig. 1-8**. For monitoring traffic, a uniform distribution of the sensor probes over the area is required. Typically 10 to 20 percent of the total number of vehicles, used as sensor nodes, equal apportionment in the area provide enough information for analyzing the traffic in an area. Such coverage may be realized by providing the vehicles in taxi network, the municipal transport network and/or one or more express delivery networks, etc. with a sensor node.

In a further embodiment, all vehicles within a certain area may be provided with a sensor node. In such situation sensor nodes may be configured to directly communicate with sensor nodes within their transmission area. In one embodiment, the sensor node may transmit a packet comprising the location information both to the nearest coordinating node and to sensor nodes within its transmission range. Sensor nodes receiving the packet may compare the distances in the received packet with the distances of the receiving sensor nodes as stored their memories. If the difference between the locations is too small, the sensor node may warn the vehicle driver or may send a signal to the control system of the vehicle so that the control system may take measures, e.g. initiate a breaking action.

The systems and methods above may be used in traffic control system enabling e.g. optimal route planning, information regarding road construction and repair works, calculating of maximum throughput capacity of transportation networks and adjustment of corresponding loads, passenger traffic quantity optimization, determining patterns of traffic congestion and methods aimed at reduction of repeated congestion, displaying the dynamics of traffic congestion formation and clearing, locating areas of road traffic accidents and producing scenarios for prompt resolution, synchronization of street-traffic control lights and dynamic road signs for any type of road junctions using a complex array of strategies, directing and organizing traffic for reversible roads, forming traffic streams and "green waves", assessing effectiveness of decisions taken.

Other applications relate to anti-theft and tracking system for the vehicles (including storage of vehicles movement history, their velocities and exact accident timing), parking systems providing analysis of existing parking network efficiency and allowing modelling of distribution and capacity of new parking facilities.

It is to be understood that any feature described in relation to any one embodiment may be used alone, or in combination with other features described, and may also be used in combination with one or more features of any other of the embodiments, or any combination of any other of the embodiments. Further equivalents and modifications not described above may also be employed without departing from the scope of the invention, which is defined in the accompanying claims.

## Claims

1. Method for determining location information of at least one moving sensor node (106) adapted for wirelessly communicating with a plurality of coordinating nodes (102) forming a fixed multi-hop communications network, the method comprising the steps of:
- providing an area or a volume associated with at least three coordinating nodes in communication with said sensor node;
- dividing said area or volume into an array of cells having a predetermined pitch;
- generating a transformation table by associating the coordinates of each of said cells with distances between said cells and each of said coordinating nodes;
- one of the at least three coordinating nodes that is in communication with said sensor node receiving in response to a first location request (LR) from said sensor node, first distance information between said sensor node moving in said area or volume and said at least three coordinating nodes, wherein said first location request (LR) is sent at a first point in time; and, wherein said first distance information is determined by the sensor node on the basis of the round-trip time of said first location request (LR);
- transforming said first distance information into first coordinates associated with said sensor node using said transformation table; and,
- transmitting said coordinates of said sensor node via one or more coordinating nodes of said fixed multi-hop communications network to a central controller.

2. Method according to claim 1, the method further comprises the steps of:
- providing the coordinates of said coordinating nodes;
- determining the coordinates of each of said cells in said area using said coordinates of said coordinating nodes.

3. Method according to claims 1 and 2, the method further comprises the steps of:
- said sensor node transmitting a request to said coordinating nodes;
- each of said coordinating nodes sending response signal back to the sensor node;
- determining on the basis of the response signals said first distance information;
- sending said first distance information to one of said coordinating nodes.

4. Method according to claim 3, wherein the method further comprises the steps of:
- determining first distances between the sensor node and each of said coordinating nodes on the basis of the round-trip time associated with each response signal;
- sending said distances between said sensor node and each of said coordinating nodes in a location packet to one of said coordinating nodes.

5. Method according to claim 4, wherein the method further comprises the steps of:
- determining on the basis of said first distances the coordinating node closest to the sensor node;
- sending said location packet to said closest coordinating node.

6. Method according to any of claims 1-5, wherein a second point in time t2 for generating second distances between the sensor node moving in said area and said coordinating nodes is determined on the basis of the velocity of said sensor node, preferably on the basis of the velocity of said sensor node at said first point in time t1.

7. Method according to claim 6, the method comprising the step of:
- receiving in response to a second location-request of said sensor node, second distances between said sensor node moving in said area and said coordinating nodes, said second location request being sent at said second point in time t2;
- calculating the velocity of the sensor at said second point in time using said first and second distances and said first point in time t1 and said second point in time t2.

8. Method according to any of claims 1-7, wherein said first and/or second location request at least comprises a sensor identifier.

9. Method according to any of claims 1-8, wherein each of said response signal comprises a sensor identifier for identifying a location request associated with said response signal and/or a coordinating node identifier for identifying the coordinating node which generated said response signal.

10. Method according to any of claims 1-9, wherein at said distances between said sensor node and said coordinating nodes are determined on the basis of the round-trip time of said location request transmitted by said sensor node to each of said coordinating nodes.

11. Method according to any of claim 1-10, wherein said sensor node comprises at least one sensor for sensing a gas concentration, a temperature and/or an acceleration and wherein said sensor node is further configured to transmit sensor information associated with said sensor to at least one coordination node.

12. System for determining location information of a sensor node, the system comprising a plurality of coordinating nodes that form a fixed multi-hop communications network wherein at least one moving sensor node is in wireless communication with at least three of said coordinating nodes and wherein said location information is transmitted via one or more coordinating nodes of said fixed multi-hop communications network to a central controller;
and, wherein said sensor node comprises:
- means for transmitting location requests (LR) to said coordinating nodes;
- means for determining distances between the sensor node moving in said area or volume and said coordinating nodes and means for sending said distances to said coordinating node comprising said location function on the basis of the round-trip time of the location request (LR); and,
- means for sending said distances to one of said at least three coordinating nodes;
and, wherein at least one of said coordinating nodes comprises:
- a grid function configured to associated an area or volume with said coordinating nodes; to divide said area or volume into cells of a predetermined pitch; and, for each of said cell to associate distances between said cell and each of said coordinating nodes with absolute coordinates.

13. Sensor node adapted for use in a system according to claim 12, the sensor node comprising:
- a transmitter configured for sending a location request to at least three coordinating nodes, said location request comprising at least a sensor identifier.
- a receiver configured for receiving a response signal from said each of said coordinating nodes, said response signal comprising a sensor identifier for identifying the location request associated with said response signal and a coordinating node identifier for identifying the coordinating node which generated said response signal;
- a clock for determining transmission time of said location request and/or arrival time information of each of said response signals;
- a location function configured for determining the distances between said sensor node and said coordinating nodes using said arrival time information, said location function further being configured for providing a location packet comprising said distances and for transmitting said location packet to at least on of said coordinating nodes.

14. Coordinating node adapted for use in a system according to claim 12, the coordinating node comprising:
- a transmitter configured for transmitting a response signal, said response signal comprising a sensor identifier for identifying a location request associated with a response signal and a coordinating node identifier for identifying said coordinating node;
- a receiver configured for receiving a location request from a sensor node, said location request comprising at least a sensor identifier and for receiving distances between the sensor node and said coordinating nodes.
- a grid function configured for determining an area associated with at least three coordinating nodes in communication with said sensor node, said area being divided into an array of cells having a predetermined pitch, said grid function further being configured for generating a transformation table associating the coordinates of each of said cells with predetermined distances between said cell and each of said coordinating nodes;
- a location function for transforming said first distances into first coordinates using said transformation table.

15. A computer program product comprising software code portions configured for, when run in the processor of a mobile device, executing the method steps according to claims 1-11.

## Patentansprüche

1. Verfahren zur Bestimmung von Positionsangaben von mindestens einem sich bewegenden Sensorknoten (106), eingerichtet zum drahtlosen Kommunizieren mit einer Mehrzahl von Koordinatenknoten (102), wobei sich ein festes Multi-Hop-Kommunikationsnetzwerk bildet, das Verfahren aufweisend die Schritte:
- Bereitstellen eines Bereichs oder eines Volumens, welcher(s) mit mindestens drei Koordinatenknoten assoziiert ist, welche in Kommunikation mit dem genannten Sensorknoten stehen;
- Aufteilen des genannten Bereichs oder des Volumens in ein Feld aus Zellen mit einem vorbestimmten Abstand;
- Erzeugen einer Transformationstabelle durch Assoziieren der Koordinaten jeder der genannten Zellen mit Distanzen zwischen den genannten Zellen und jeder der genannten Koordinatenknoten; wobei
- einer der mindestens drei Koordinatenknoten, welcher in Kommunikation mit dem genannten Sensor steht, in Antwort auf eine erste Positionsanfrage (LR) von dem genannten Sensorknoten erste Distanzangaben zwischen dem genannten Sensorknoten, welcher sich in dem genannten Bereich oder dem Volumen bewegt, und den genannten mindestens drei Koordinatenknoten empfängt, wobei die erste Positionsanfrage (LR) zu einem ersten Zeitpunkt gesendet wird; und wobei die genannten ersten Distanzangaben durch den Sensorknoten auf der Basis der Umlaufzeit der genannten ersten Positionsanfrage (LR) bestimmt wird;
- Umwandeln der genannten ersten Distanzangaben in erste Koordinaten, welche mit dem genannten Sensorknoten assoziiert sind unter Verwendung der genannten Transformationstabelle; und
- Übertragen der genannten Koordinaten des genannten Sensorknotens über ein oder mehrere Koordinatenknoten des genannten festen Multi-Hop-Kommunikationsnetzwerks an eine zentrale Steuerung.

2. Verfahren gemäß Anspruch 1, wobei das Verfahren weiterhin die Schritte aufweist:
- Bereitstellen der Koordinaten der genannten Koordinatenknoten;
- Bestimmen der Koordinaten von jeder der genannten Zellen in dem genannten Bereich unter Verwendung der genannten Koordinaten der genannten Koordinatenknoten.

3. Verfahren gemäß Anspruch 1 und 2, wobei das Verfahren weiterhin die Schritte aufweist:
- der genannte Sensorknoten überträgt eine Anfrage an die genannten Koordinatenknoten;
- jeder der genannten Koordinatenknoten sendet ein Antwortsignal zurück an den Sensorknoten;
- Bestimmen der genannten ersten Distanzangaben auf der Basis der Antwortsignale;
- Senden der genannten ersten Distanzangaben an einen der genannten Koordinatenknoten.

4. Verfahren gemäß Anspruch 3, wobei das Verfahren weiterhin die Schritte aufweist:
- Bestimmen erster Distanzen zwischen dem Sensorknoten und jedem der genannten Koordinatenknoten auf der Basis der Umlaufzeit, welche mit jedem Antwortsignal assoziiert ist;
- Senden der genannten Distanzen zwischen dem genannten Sensorknoten und jedem der genannten Koordinatenknoten in einem Positionspaket an einen der Koordinatenknoten.

5. Verfahren gemäß Anspruch 4, wobei das Verfahren weiterhin die Schritte aufweist:
- Bestimmen des Koordinatenknotens, welcher am nächsten zum Sensorknoten liegt auf der Basis der genannten ersten Distanzen;
- Senden des genannten Positionspakets an den genannten nächstgelegenen Koordinatenknoten.

6. Verfahren gemäß einem der Ansprüche 1 - 5, wobei ein zweiter Zeitpunkt t2 zum Erzeugen zweiter Distanzen zwischen dem Sensorknoten, welcher sich in dem genannten Bereich bewegt, und den genannten Koordinatenknoten auf der Basis der Geschwindigkeit des genannten Sensorknotens bestimmt wird, bevorzugt auf der Basis der Geschwindigkeit des genannten Sensorknotens zu dem genannten ersten Zeitpunkt t1.

7. Verfahren gemäß Anspruch 6, wobei das Verfahren den Schritt aufweist:
- Empfangen zweiter Distanzen zwischen dem genannten Sensorknoten, welcher sich in dem genannten Bereich bewegt, und den genannten Koordinatenknoten in Antwort auf eine zweite Positionsanfrage des genannten Sensorknotens, wobei die genannte zweite Positionsanfrage zu einem zweiten Zeitpunkt t2 gesendet wird;
- Berechnen der Geschwindigkeit des Sensors zu einem zweiten Zeitpunkt unter Verwendung der genannten ersten und zweiten Distanzen und dem genannten ersten Zeitpunkt t1 und dem genannten zweiten Zeitpunkt t2.

8. Verfahren gemäß einem der Ansprüche 1 - 7, wobei die genannte erste und/oder die zweite Positionsanfrage mindestens ein Sensor-Identifizierungszeichen aufweist.

9. Verfahren gemäß einem der Ansprüche 1 - 8, wobei jedes der genannten Antwortsignale ein Sensor-Identifizierungszeichen zum Identifizieren einer Positionsanfrage aufweist, welche mit dem genannten Antwortsignal assoziiert ist und/oder ein Koordinatenknoten-Identifizierungszeichen zum Identifizieren des Koordinatenknotens, welcher das genannte Antwortsignal erzeugte.

10. Verfahren gemäß einem der Ansprüche 1 - 9, wobei die genannten Distanzen zwischen dem Sensorknoten und den Koordinatenknoten auf der Basis der Umlaufzeit, welche von dem genannten Sensorknoten an jeden der genannten Koordinatenknoten gesendet wird, der genannten Positionsanfrage bestimmt werden.

11. Verfahren gemäß einem der Ansprüche 1 - 10, wobei der genannte Sensorknoten mindestens einen Sensor zum Abtasten einer Gaskonzentration, einer Temperatur und/oder einer Beschleunigung aufweist und wobei der genannte Sensorknoten weiterhin dazu eingerichtet ist, die Sensorangaben, welche mit dem genannten Sensor assoziiert sind, an mindestens einen Koordinatenknoten zu übertragen.

12. System zur Bestimmung von Positionsangaben eines Sensorknotens, wobei das System eine Mehrzahl von Koordinatenknoten aufweist, welche ein festes Muli-Hop-Kommunikationsnetzwerk bilden, wobei mindestens ein sich bewegender Sensorknoten in drahtloser Kommunikation mit mindestens drei der genannten Koordinatenknoten steht und wobei die genannten Positionsangaben über einen oder mehrere Koordinatenknoten des genannten festen Muli-Hop-Kommunikationsnetzwerks an eine zentrale Steuerung übertragen werden;
und, wobei der genannte Sensorknoten aufweist:
- Mittel zum Übertragen von Positionsanfragen (LR) an die genannten Koordinatenknoten;
- Mittel zum Bestimmen von Distanzen zwischen dem Sensorknoten, welcher sich in dem genannten Bereich oder dem genannten Volumen bewegt, und den genannten Koordinatenknoten und Mittel zum Senden der genannten Distanzen an die genannten Koordinatenknoten, welche die genannte Positionierungsfunktion auf der Basis der Umlaufzeit der Positionsanfrage (LR) aufweisen; und,
- Mittel zum Senden der genannten Distanzen an einen der genannten mindestens drei Koordinatenknoten;
und, wobei mindestens einer der genannten Koordinatenknoten aufweist:
- eine Rasterfunktion, die dazu eingerichtet ist, um einen Bereich oder ein Volumen mit den genannten Koordinatenknoten zu assoziieren; um den genannten Bereich oder das Volumen in Zellen eines vorbestimmten Abstands aufzuteilen; und, um für jede der genannten Zelle die Distanzen zwischen der genannten Zelle und jedem der genannten Koordinatenknoten mit absoluten Koordinaten zu assoziieren.

13. Sensorknoten, eingerichtet zur Verwendung in einem System gemäß Anspruch 12, der Sensorknoten aufweisend:
- einen Sender, eingerichtet zum Senden einer Positionsanfrage an mindestens drei Koordinatenknoten, wobei die genannte Positionsanfrage mindestens ein Sensor-Identifizierungszeichen aufweist;
- einen Empfänger, eingerichtet zum Empfangen eines Antwortsignals von jedem der genannten Koordinatenknoten, wobei das Antwortsignal ein Sensor-Identifizierungszeichen zum Identifizieren der Positionsanfrage aufweist, welche mit dem genannten Antwortsignal assoziiert ist, und ein Koordinatenknoten-Identifizierungszeichen zum Identifizieren des Koordinatenknotens, welcher das genannte Antwortsignal erzeugte;
- eine Uhr zum Bestimmen der Übertragungszeit der genannten Positionsanfrage und/oder Ankunftszeitangaben jedes der genannten Antwortsignale;
- eine Positionierungsfunktion, eingerichtet zum Bestimmen der Distanzen zwischen dem genannten Sensorknoten und den genannten Koordinatenknoten unter Verwendung der genannten Ankunftszeitangaben, wobei die genannte Positionierungsfunktion weiterhin zum Breitstellen eines Positionspakets, welches die genannten Distanzen aufweist, und zum Übertragen des genannten Positionspakets an mindestens einen der genannten Koordinatenknoten eingerichtet ist.

14. Koordinatenknoten, eingerichtet zur Verwendung in einem System gemäß Anspruch 12, der Koordinatenknoten aufweisend:
- einen Sender, eingerichtet zum Übertragen eines Antwortsignals, welches einen Sensor-Identifizierungszeichen zum Identifizieren einer Positionsanfrage, welche mit einem Antwortsignal assoziiert ist und ein Koordinatenknoten-Identifizierungszeichen zum Identifizieren des genannten Koordinatenknotens aufweist;
- einen Empfänger, eingerichtet zum Empfangen einer Positionsanfrage von einem Sensorknoten, welche mindestens ein Sensor-Identifizierungszeichen aufweist, und zum Empfangen von Distanzen zwischen dem Sensorknoten und den genannten Koordinatenknoten.
- Eine Rasterfunktion, eingerichtet zum Bestimmen eines Bereichs assoziiert mit mindestens drei Koordinatenknoten in Kommunikation mit dem genannten Sensorknoten, wobei der genannte Bereich in ein Feld aus Zellen mit einem vorbestimmten Abstand aufgeteilt wird, wobei die genannte Rasterfunktion weiterhin zum Erzeugen einer Transformationstabelle eingerichtet ist, welche die Koordinaten jeder der genannten Zellen mit vorbestimmten Distanzen zwischen der genannten Zelle und jedem der genannten Koordinatenknoten assoziiert;
- eine Positionierungsfunktion zum Umwandeln der genannten ersten Distanzen in erste Koordinaten unter Verwendung der genannten Transformationstabelle.

15. Ein Computerprogrammprodukt, aufweisend Softwarecodeteile, eingerichtet zum Ausführen der Verfahrensschritte gemäß der Ansprüche 1 - 11, wenn diese auf dem Prozessor eines Mobilgerätes laufen.

## Revendications

1. Procédé de détermination d'informations d'emplacement d'au moins un noeud de capteur mobile (106) adapté pour communiquer sans fil avec une pluralité de noeuds de coordination (102) formant un réseau de communications par bonds multiples fixe, le procédé comprenant les étapes de :
- fourniture d'une superficie ou d'un volume associé à au moins trois noeuds de coordination en communication avec ledit noeud de capteur ;
- division de ladite superficie ou dudit volume en un réseau de cellules ayant un pas prédéterminé ;
- génération d'un tableau de transformation en associant les coordonnées de chacune desdites cellules à des distances entre lesdites cellules et chacun desdits noeuds de coordination ;
- l'un des au moins trois noeuds de coordination qui est en communication avec ledit noeud de capteur recevant en réponse à une première demande de localisation (LR) en provenance dudit noeud de capteur, des premières informations de distance entre ledit noeud de capteur mobile dans ladite superficie ou dans ledit volume et lesdits au moins trois noeuds de coordination, dans lequel ladite première demande de localisation (LR) est envoyée à un premier moment donné ; et, dans lequel lesdites premières informations de distance sont déterminées par le noeud de capteur sur la base du temps d'aller-retour de ladite première demande de localisation (LR) ;
- la transformation desdites premières informations de distance en premières coordonnées associées audit noeud de capteur en utilisant ledit tableau de transformation ; et,
- la transmission desdites coordonnées dudit noeud de capteur via un ou plusieurs noeuds de coordination dudit réseau de communications par bonds multiples fixe vers une unité de commande centrale.

2. Procédé selon la revendication 1, le procédé comprenant en outre les étapes de :
- fourniture des coordonnées desdits noeuds de coordination ;
- détermination des coordonnées de chacune desdites cellules dans ladite superficie en utilisant lesdites coordonnées desdits noeuds de coordination.

3. Procédé selon les revendications 1 ou 2, le procédé comprenant en outre les étapes de:
- transmission par ledit noeud de capteur d'une demande auxdits noeuds de coordination ;
- chacun desdits noeuds de coordination envoyant un signal de réponse au noeud de capteur ;
- détermination sur la base des signaux de réponse desdites premières informations de distance ;
- envoi desdites premières informations de distance à l'un desdits noeuds de coordination.

4. Procédé selon la revendication 3, dans lequel le procédé comprend en outre les étapes de :
- détermination de premières distances entre le noeud de capteur et chacun desdits noeuds de coordination sur la base du temps d'aller-retour associé à chaque signal de réponse ;
- envoi desdites distances entre ledit noeud de capteur et chacun desdits noeuds de coordination dans un paquet de localisation vers l'un desdits noeuds de coordination.

5. Procédé selon la revendication 4, dans lequel le procédé comprend en outre les étapes de :
- détermination sur la base desdites premières distances du noeud de coordination le plus proche du noeud de capteur ;
- envoi dudit paquet de localisation audit noeud de coordination le plus proche.

6. Procédé selon l'une quelconque des revendications 1 à 5, dans lequel un second moment donné t2 pour générer des secondes distances entre le noeud de capteur mobile dans ladite superficie et lesdits noeuds de communication est déterminé sur la base de la vitesse dudit noeud de capteur, de préférence sur la base de la vitesse dudit noeud de capteur au niveau du premier moment donné t1.

7. Procédé selon la revendication 6, le procédé comprenant les étapes de :
- réception, en réponse à une seconde demande de localisation dudit noeud de capteur, de secondes distances entre ledit noeud de capteur mobile dans ladite superficie et lesdits noeuds de coordination, ladite seconde demande de localisation étant envoyée au niveau dudit second moment donné t2 ;
- calcul de la vitesse du capteur au niveau dudit second moment donné en utilisant lesdites premières et secondes distances et ledit premier moment donné t1 et ledit second moment donné t2.

8. Procédé selon l'une quelconque des revendications 1 à 7, dans lequel lesdites première et/ou seconde demandes de localisation comprennent au moins un identifiant de capteur.

9. Procédé selon l'une quelconque des revendications 1 à 8, dans lequel chacun desdits signaux de réponse comprend un identifiant de capteur pour identifier une demande de localisation associée audit signal de réponse et/ou un identifiant de noeud de coordination pour identifier le noeud de coordination qui a généré ledit signal de réponse.

10. Procédé selon l'une quelconque des revendications 1 à 9, dans lequel lesdites distances entre ledit noeud de capteur et lesdits noeuds de coordination sont déterminées sur la base du temps d'aller-retour de ladite demande de localisation transmise par ledit noeud de capteur à chacun desdits noeuds de coordination.

11. Procédé selon l'une quelconque des revendications 1 à 10, dans lequel ledit noeud de capteur comprend au moins un capteur pour détecter une concentration en gaz, une température et/ou une accélération et dans lequel ledit noeud de capteur est en outre configuré pour transmettre des informations de capteur associées audit capteur à au moins un noeud de coordination.

12. Système de détermination d'informations de localisation d'un noeud de capteur, le système comprenant une pluralité de noeuds de coordination qui forment un réseau de communications à bonds multiples fixe, dans lequel au moins un noeud de capteur mobile est en communication sans fil avec au moins trois desdits noeuds de coordination et dans lequel lesdites informations de localisation sont transmises via un ou plusieurs noeuds de coordination dudit réseau de communication à bonds multiples fixe vers une unité de commande centrale ;
et, dans lequel ledit noeud de capteur comprend :
- un moyen de transmission de demandes de localisation (LR) auxdits noeuds de coordination ;
- un moyen de détermination de distances entre le noeud de capteur mobile dans ladite superficie ou dans ledit volume et lesdits noeuds de coordination et un moyen d'envoi desdites distances audit noeud de coordination comprenant ladite fonction de localisation sur la base du temps d'aller-retour de la demande de localisation (LR) ; et
- un moyen d'envoi desdites distances à l'un desdits au moins trois noeuds de coordination ;
et, dans lequel au moins l'un desdits noeuds de coordination comprend :
- une fonction de grille configurée pour associer une superficie ou un volume auxdits noeuds de coordination ; diviser ladite superficie ou ledit volume en des cellules d'un pas prédéterminé ; et, pour chacune desdites cellules, associer des distances entre ladite cellule et chacun desdits noeuds de coordination à des coordonnées absolues.

13. Noeud de capteur adapté pour une utilisation dans un système selon la revendication 12, le noeud de capteur comprenant :
- un émetteur configuré pour envoyer une demande de localisation à au moins trois noeuds de coordination, ladite demande de localisation comprenant au moins un identifiant de capteur,
- un récepteur configuré pour recevoir un signal de réponse en provenance de chacun desdits noeuds de coordination, ledit signal de réponse comprenant un identifiant de capteur pour identifier la demande de localisation associée audit signal de réponse et un identifiant de noeud de coordination pour identifier le noeud de coordination qui a généré ledit signal de réponse ;
- une horloge pour déterminer le temps de transmission de ladite demande de localisation et/ou des informations d'heure d'arrivée de chacun desdits signaux de réponse ;
- une fonction de localisation configurée pour déterminer les distances entre ledit noeud de capteur et lesdits noeuds de coordination en utilisant lesdites informations d'heure d'arrivée, ladite fonction de localisation étant en outre configurée pour fournir un paquet de localisation comprenant lesdites distances et pour transmettre lesdits paquets de localisation à au moins l'un desdits noeuds de coordination.

14. Noeud de coordination adapté pour une utilisation dans un système selon la revendication 12, le noeud de coordination comprenant :
- un émetteur configuré pour émettre un signal de réponse, ledit signal de réponse comprenant un identifiant de capteur pour identifier une demande de localisation associée à un signal de réponse et un identifiant de noeud de coordination pour identifier ledit noeud de coordination ;
- un récepteur configuré pour recevoir une demande de localisation en provenance d'un noeud de capteur, ladite demande de localisation comprenant au moins un identifiant de capteur et pour recevoir des distances entre le noeud de capteur et lesdits noeuds de coordination ;
- une fonction de grille configurée pour déterminer une superficie associée à au moins trois noeuds de coordination en communication avec ledit noeud de capteur, ladite superficie étant divisée en un réseau de cellules ayant un pas prédéterminé, ladite fonction de grille étant en outre configurée pour générer un tableau de transformation associant les coordonnées de chacune desdites cellules à des distances prédéterminées entre ladite cellule et chacun desdits noeuds de coordination ;
- une fonction de localisation pour transformer lesdites premières distances en des premières coordonnées en utilisant ledit tableau de transformation.

15. Produit de programme informatique comprenant des parties de code de logiciel configurées pour, lorsqu'il est exécuté dans le processeur d'un dispositif mobile, exécuter les étapes de procédé selon les revendications 1 à 11.
